# EUROPÄISCHE PATENTANMELDUNG

(11) **EP 1 191 771 A2**
(43) Veröffentlichungstag der Anmeldung: **27.03.2002**
(21) Anmeldenummer: 01122453.2
(22) Anmeldetag: 20.09.2001
(51) Int. Cl.: H04M 3/38

(54) **Verfahren zur Authentisierung eines Telekommunikationsteilnehmers und Telekommunikationsanlage**

(30) Priorität: 22.09.2000 DE 10047177
(71) Anmelder: Tenovis GmbH & Co. KG, 60362 Frankfurt am Main (DE)
(72) Erfinder: Schneider, Norbert, 47800 Krefeld (DE); Braun, Heinz, 41593 Dormagen (DE); Henneke, Dietmar, 41462 Neuss (DE)
(74) Vertreter: Bohnenberger, Johannes, Dr.

(57) **Zusammenfassung**

Verfahren zur Authentisierung beim Zugriff auf eine Telekommunikationsanlage zur Nutzung von mindestens einer Funktion derselben über eine Amtsleitung durch einen Telekommunikationsteilnehmer von einem fernen Endgerät, dessen Rufnummer (CLI) mit übertragen wird, wobei bei dem Anruf ein durch den Telekommunikationsteilnehmer eingegebener Authentisierungscode oder biometrischer Merkmalssatz übertragen und in der Telekommunikationsanlage aufgrund der übertragenen Rufnummer sowie des Authentisierungscodes bzw. biometrischen Merkmalssatzes eine Prüfung der Zugriffsberechtigung durchgeführt und in Abhängigkeit vom Prüfungsergebnis eine Freigabe oder Sperrung der Funktion vorgenommen wird.

## Beschreibung

Die Erfindung betrifft ein Verfahren zur Authentisierung beim Zugriff auf eine Telekommunikationsanlage nach dem Oberbegriff des Patentanspruchs 1 bzw. eine Telekommunikationsanlage nach dem Oberbegriff des Anspruchs 13.

Telekommunikationsteilnehmer, die eine Telekommunikationsanlage, insbesondere eine Nebenstellenanlage, eines Unternehmens über unternehmensexterne Amtsleitungen von außerhalb anrufen, führen diesen Anruf oftmals in der Absicht durch, sich über die Telekommunikationsanlage des Unternehmens mit einem anzurufenden anderen Teilnehmer verbinden zu lassen. Mitarbeiter des Unternehmens können von jedem beliebigen Ort außerhalb des Unternehmens über dessen Telekommunikationsanlage Gespräche auf Kosten des Unternehmens führen, da es sich um unternehmenseigene Leitungen sowie Netze handelt, über die die Telekommunikationsverbindung aufgebaut wird. Außerdem wird in Unternehmen vielfach von Mitarbeitern von außerhalb angerufen, um Zugriff auf in oder bei der internen Telekommunikationsanlage gespeicherte Daten - etwa Anruferlisten bei einer Nebenstelle, Rufnummernlisten oder elektronisch gespeicherte Notizbucheinträge - zu erlangen, die der Mitarbeiter an seinem aktuellen Aufenthaltsort für seine Arbeit benötigt.

Derartige Telekommunikationsanlagen eines Unternehmens sind als private automatische Nebenstellenanlagen (Private Automatic Branch Exchange = PABX), hauptsächlich für Telefongespräche vorgesehen. Die PABX vermittelt nach dem Durchschaltprinzip, d. h. zwischen den Teilnehmern besteht eine durchgehende Verbindung, sofern zuvor eine Verbindung aufgebaut wurde.

Um eine derartige PABX vor dem Zugriff unberechtigter Teilnehmer zu schützen, sind Verfahren zur Authentisierung des anrufenden Telekommunikationsteilnehmers, nachfolgend Anrufer genannt, bekannt. Eines dieser Verfahren sieht vor, daß in der PABX eine von dem Anrufer auf seinem Telefon einzugebende Ziffernfolge geprüft wird, um die Authentisierung eines Anrufers festzustellen. Falls jedoch der Anrufer diese ihm bekannte Ziffernfolge verlieren sollte, so besteht für den Finder die Möglichkeit, als für den Zugriff auf die Telefonanlage unberechtigte Person Telefongespräche auf Kosten des Unternehmens zu führen. Desweiteren kann die unberechtigte Person durch ihren Einstieg in die PABX eines Unternehmens unternehmensinterne Daten auskundschaften und/oder die Telekommunikationsanlage beschädigen. Außerdem ist natürlich ein Mitarbeiter, der die zur Authentisierung vorgesehene Ziffernfolge nicht mehr verfügbar hat, zumindest vorübergehend ohne Zugriffsmöglichkeit auf die Telefonanlage des eigenen Unternehmens und die hierüber zu realisierenden Informations- und Kommunikationsmöglichkeiten.

Der Erfindung liegt somit die Aufgabe zugrunde, das gattungsgemäße Verfahren dahingehend weiterzubilden, daß die Sicherheit vor unberechtigtem Zugriff auf relativ einfache und kostengünstige Weise erhöht wird, sowie eine entsprechende Telekommunikationsanlage anzugeben.

Diese Aufgabe wird durch ein Verfahren nach Patentanspruch 1 bzw. durch eine Telekommunikationsanlage nach Patentanspruch 13 gelöst.

Insbesondere wird die Aufgabe durch ein Verfahren gelöst, bei welchem zur Nutzung von Funktionen der Telekommunikationsanlage über eine Amtsleitung der Anruf des Anrufers zusammen mit einer mitübertragenen Rufnummer in einer Telekommunikationsanlage eingeht, wobei mit dieser mitübertragenen Rufnummer und einem durch den Anrufer zu sendenden Authentisierungscode bzw. biometrischen Merkmalssatz eine zweifache Authentisierung erfolgt. Durch eine derartige Erhöhung der Sicherheit gegen unbefugten Zugriff durch unberechtigte Personen ist gewährleistet, daß ausschließlich die Mitarbeiter eines Unternehmens von jedem beliebigen Ort außerhalb des Unternehmens auf die Telekommunikationsanlage des Unternehmens zurückgreifen können, um über diese weltweite Gespräche über Unternehmensleitungen und -netze zu führen.

Vorteilhaft wird die mit dem Anruf mitübertragene Rufnummer in einer Vergleichseinrichtung in der Telekommunikationsanlage mit in einem ersten Speicher abgespeicherten Referenz-Ziffernfolgen verglichen. Wenn unter den abgespeicherten Ziffernfolgen eine Ziffernfolge gefunden wird, die der mitübertragenen Rufnummer entspricht, so ist dadurch ein erster Prüfungsschritt im Verfahren zur Authentisierung eines Anrufers erfolgreich absolviert worden. Ein ähnlicher Ablauf des Vergleiches kann für den durch den Anrufer zu sendenden Authentisierungscode und in einem zweiten Speicher gespeicherten Referenz-Authentisierungscodes bzw. Referenz-Merkmalssatzes biometrischer Merkmale als zweiter Prüfungsschritt durchgeführt werden.

Alternativ wird zunächst lediglich die mitübertragene Rufnummer mit einer in der Telekommunikationsanlage gespeicherten Referenz-Ziffernfolge verglichen und anschließend, sofern eine mit der Rufnummer identische Ziffernfolge gefunden wurde, ein dieser Ziffernfolge zugeordneter Referenz-Authentisierungscode aufgerufen, der mit dem durch den Anrufer zu sendenden Authentisierungscode identisch sein muß. Auch bei diesem Verfahrensablauf findet eine doppelte Prüfung in Form von zwei Prüfungsschritten zur Authentisierung des Anrufers statt, wodurch eine erhöhte Sicherheit gegen unberechtigten Zugriff auf die Telekommunikationsanlage sichergestellt wird.

Nach erfolgreicher Prüfung der mitübertragenen Rufnummer, beispielsweise in Form einer Calling Line Identification (CLI), die einen Endgeräteidentifikator darstellt, und des zu sendenden Authentisierungscodes wird es dem berechtigten Anrufer ermöglicht, sich über eine Amtsleitung in die Telekommunikationsanlage einzuwählen und von dort aus die Systemfunktionen der Telekommunikationsanlage, wie einer PABX, zu nutzen. Diese Systemfunktionen können aus der PABX gehender externer Telefonverkehr oder das Aktivieren von Leistungsmerkmalen der PABX sein.

Für den Fall des Inanspruchnehmens der Systemfunktion des gehenden externen Telefonverkehrs kann der Anrufer zusätzlich eine einzugebende Zielrufnummer des anzurufenden Telekommunikationsteilnehmers über sein Telefon eingeben, woraufhin die Telekommunikationsanlage eine Verbindung zum gewünschten anzurufenden Teilnehmer herstellt. Aber auch das Einrichten eines Dienstes, also das Aktivieren eines Leistungsmerkmales, in der PABX wird durch Zugriff des Anrufers nach positiver Prüfung seiner Berechtigung ermöglicht. Einem unberechtigten Anrufer ist aufgrund des nicht durchführbaren Einstiegs in die PABX ein solches Einrichten eines Dienstes in der PABX nicht ermöglicht, weshalb er auch nicht auf Daten innerhalb der PABX und der damit zusammenhängenden Dienste zurückgreifen kann.

Der erwähnte Authentisierungscode ist beispielsweise eine PIN oder auch ein Paßwort, die/das vom Anrufer an seinem Endgerät entsprechend dessen technischen Möglichkeiten und den Festlegungen des genutzten Übertragungsprotokolls eingegeben wird. Für den Nutzer noch einfacher ist die Verwendung biometrischer Merkmale, insbesondere von Sprachmerkmalen oder eines Papillarlinienmusters, des Anrufers zum Nachweis von dessen Zugriffsberechtigung. Erhebliches Anwendungspotential hat aus diesseitiger Sicht insbesondere die Sprecheridentifikation mit Methoden der Spracherkennung, die auf einen im Rahmen einer Initialisierung des Spracherkenners gewonnene Referenz-Sprechermerkmale zurückgreift. Hierbei kann kein Authentisierungscode vergessen werden oder in falsche Hände geraten, wodurch der Bedienkomfort und die Sicherheit des Systems besonders hoch sind.

In einer bevorzugten Ausführungsform kann durch einen speziellen Wahlabrufton oder eine spezielle Sprachansage oder einen Hinweistext mit Hilfe einer Leistungsmerkmalsvariante der PABX der Anrufer zur Eingabe des Authentisierungscodes bzw. zur Vornahme von zur Erfassung der biometrischen Merkmale geeigneten Handlungen und/oder zur Eingabe der Zielrufnummer aufgefordert werden. Dadurch wird eine zeitliche Koordination zwischen dem Prüfungsschritt des Prüfens der mitübertragenen Rufnummer und dem Prüfungsschritt des Prüfens des Authentisierungscodes bzw. der Erfassung von biometrischen Merkmalen und dem Eingeben der Zielrufnummer eingerichtet. Dies erleichtert dem Anrufer die zeitliche Abstimmung zwischen dem eigentlichen Anruf bei der Telekommunikationsanlage und der Eingabe des zu sendenden Authentisierungscodes sowie der Eingabe der Zielrufnummer.

Gemäß einer weiteren Ausführungsform wird eine vorbestimmte Zeitspanne zur Verfügung gestellt, innerhalb welcher der Anrufer das Authentisierungsverfahren durchzuführen hat. Eine solche begrenzte Zeitspanne beispielsweise zum Eingeben des Authentisierungscodes weist den Vorteil auf, daß unberechtigte Personen nicht die Möglichkeit haben, durch langwieriges Ausprobieren den zu sendenden Authentisierungscode, auch mit Hilfsmitteln, für die zugehörige mitübertragene Rufnummer eines berechtigten Anrufers herauszufinden.

Weitere Ausführungsformen der Erfindung ergeben sich aus den Unteransprüchen.

Nachfolgend wird die Erfindung anhand von Ausführungsbeispielen beschrieben, die anhand der Figuren erläutert werden. Von diesen zeigen:
- Fig. 1: ein Flußdiagramm eines Verfahrensablaufes gemäß einer Ausführungsform der Erfindung und
- Fig. 2: ein Funktions-Blockschaltbild von für die Ausführung der Erfindung wesentlichen Komponenten einer Ausführungsform der vorgeschlagenen Telekommunikationsanlage.

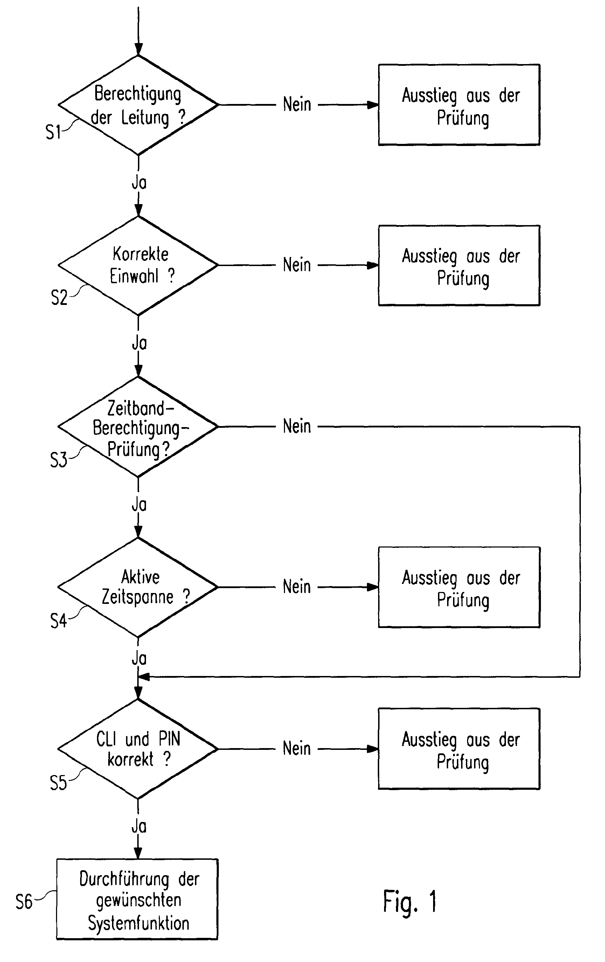

In Fig. 1 wird der Verfahrensablauf zur Authentisierung eines Anrufers in einer PABX dargestellt. Um die Systemfunktionen, wie beispielsweise den aus der PABX gehenden externen Telefonverkehr oder das Aktivieren eines Leistungsmerkmals der PABX, in Anspruch zu nehmen, ist beim Anruf eines Teilnehmers, der die PABX über eine Amtsleitung von außerhalb anruft, zunächst eine bestimmte Berechtigung der Leitung (Calling Line) zu prüfen und festzustellen, ob eine korrekte Einwahl des Anrufers in die PABX stattfindet (Schritt S1 und Schritt S2). Ist eine dieser Bedingungen nicht erfüllt, besteht also keine Berechtigung der Leitung oder keine korrekte Einwahl, so erfolgt ein sofortiger Ausstieg aus der Authentisierungsprüfung.

Anderenfalls wird in einem Schritt S3 festgestellt, ob eine Prüfung hinsichtlich der Zugangsberechtigung während einer bestimmten Zeitspanne stattfinden soll oder nicht. Dies kann abhängig von der mitübertragenen Rufnummer des Anrufers geprüft werden. Falls eine derartige Zugangsberechtigung für eine bestimmte Zeitspanne überprüft werden soll, wird in einem Schritt S4 die aktive Zeitspanne in Abhängigkeit von dem jeweiligen Anrufer festgestellt. Falls dieser nicht innerhalb seiner zugewiesenen Zeitspanne angerufen hat, bedeutet dies den sofortigen Ausstieg aus der Prüfung zur Authentisierung des Anrufers. Dies geschieht insbesondere, wenn die Telekommunikationsanlage in einem Listen_Mode-Zustand aktiviert ist. Ein Anruf außerhalb des aktiven Zeitabschnittes wird dann als Fehlversuch interpretiert, und die mitgelieferte Rufnummer sowie eine Pseudorufnummer der Leitung kann auf einer Ausgabeeinrichtung zur Nachprüfung ausgegeben werden.

In einem Schritt S5 findet dann die Prüfung der mitübertragenen Rufnummer und des zu sendenden Authentisierungscodes (speziell einer PIN) zur Authentisierung des Anrufers statt.

Die mitübertragene Rufnummer (Calling Line Identification = CLI oder Origination Adress = OAD) stellt im Grunde eine Anschluß-Identifikation dar. Der Telefonanschluß des Anrufers muß für die Durchführung des erfindungsgemäßen Verfahrens eine CLI aus dem Amt mitbringen, welches für deren Freischaltung zuständig ist. Die übertragene CLI wird geprüft, indem sie mit den Referenz-Ziffernfolgen, die für alle berechtigten Anrufer in einem ers-ten Speicher, beispielsweise einer Tabelle, der PABX abgespeichert sind, verglichen wird.

Findet sich die CLI des Anrufers in den abgespeicherten Ziffernfolgen nicht wieder, so wird bei einem derartigen Fehlversuch ein Ausdruck auf einer Ausgabeeinrichtung mit der falschen CLI und der Rufnummer der kommend belegten Leitung in die PABX ausgegeben. Anschließend findet ein Ausstieg aus der Prüfung zur Authentisierung des Anrufers statt.

Sofern sich die CLI in dem ersten Speicher als Ziffernfolge wiederfindet, ist dem Amt zu signalisieren, daß ab diesem Zeitpunkt eine Eingabe von seiten des Anrufers nur noch per Mehrfrequenz-Wahlverfahren (MFV = Tonwahl) möglich ist. Dies kann mit dem Senden der Meldung CONNECT von der PABX zur Amtsperipherie erreicht werden. Das Endgerät des Anrufers muß also dafür ausgerüstet sein, per MFV Eingaben vornehmen zu können. Das heißt, sofern er ein digitales Endgerät oder ein IWV-Endgerät als Telefon benutzt, muß er einen MFV-Handsender zur Kopplung mit seinem Telefon oder ein MFV-wahlfähiges digitales Endgerät benutzen.

Anschließend wird der Anrufer durch ein Leistungsmerkmal der Telekommunikationsanlage zur Eingabe des einzugebenden Authentisierungscodes aufgefordert. Der einzugebende Authentisierungscode kann eine Ziffernfolge oder ein Kennwort sein, wie beispielsweise eine Personal Identification Number (PIN). Dieses Leistungsmerkmal kann das Anschalten eines Wahlabruftones oder eines Hinweistextes, der z. B. lautet: "Bitte ab jetzt Ihren PIN-Code und die Zielrufnummer per MFV wählen" sein. Sobald der Anrufer daraufhin sein erstes MFV-Zeichen eingibt und dieses in der PABX eintrifft, wird die oben genannte Aufforderung gelöscht.

Sobald die vollständige PIN eingegeben wurde, wird sie mit einer in einem zweiten Speicher abgespeicherten Referenz-Zeichenfolge auf Identität verglichen. Für die PIN-Prüfung werden reine Wahlinformationen, die unter anderem zur Auswahl der gehenden Leitung von der PABX dienen, gelöscht, um die PIN herauszufiltern. Für den Fall der Verneinung einer Identität findet wiederum ein Ausdruck auf der Ausgabeeinrichtung mit der falschen PIN, der CLI und der Rufnummer der kommend belegten Leitung (Zielrufnummer) statt.

Die PIN und die CLI können in verschiedenen Speichern unter Verwendung der bei der Leitung eingetragenen Gruppennummer abgelegt werden. Wie nachfolgend aufgeführt, gibt es drei Speichermöglichkeiten: Die PIN, die CLI und die CLI und PIN gemeinsam in jeweils einem Speicher.

Ablage in Speichern mit der Gruppennummer der Leitung

| **Speicher-Berechtigung** | **Datenspeicher** |
|---|---|
| 1 | CLI |
| 2 | PIN |
| 3 | CLI + PIN |

Nahezu zeitgleich mit der Eingabe der PIN oder auch zeitversetzt wird die Zielrufnummer eingegeben, die einem anzurufenden Teilnehmer zugeordnet ist, der entweder außerhalb oder innerhalb der PABX einen Telefonanschluß besitzt. Sofern die CLI und die PIN identisch mit einer der Referenz-Ziffernfolgen ist, wird der gewünschte Systemzugriff gewährt, also beispielsweise die Verbindung zum gewünschten Ziel bzw. Teilnehmer hergestellt oder auch das Einrichten eines Dienstes (Aktivieren eines Leistungsmerkmals) in der PABX vollzogen (Schritt S6). Hierzu wird insbesondere die durch MFV-Wahl eingegebene empfangene Zielrufnummer weitergegeben, so daß der Verbindungsaufbau initiiert werden kann.

Nach negativer PIN-Prüfung wird die Zielrufnummer und die falsche PIN ebenfalls gesammelt, jedoch wird ein Abbruchtimer (Auslösetotzeit) gestartet. In dieser Zeit wird vorgegangen, als wäre die PIN richtig eingegeben worden. Beim Ablauf des Abbruchtimers wird der Verbindungsaufbauversuch ausgelöst. Ein Ausdruck auf der Ausgabeeinrichtung erfolgt wiederum bei einem derartigen Fehlversuch.

Das vorgeschlagene Verfahren überwacht zum einen die Verbindungsaufbauphase vom Amt zur gewünschten Zielrufnummer des anzurufenden Teilnehmers und paßt andererseits die Rückmeldungen von der angerufenen Zielrufnummer an. Dies gewährleistet eine korrekte Signalisierung zum Amt. Ab diesem Zeitpunkt beginnt die Vergebührung des Gesprächs. Bei einer nicht erfolgreichen Anwahl erfolgt wiederum ein Ausdruck mit der (falschen) Zielrufnummer und eventuell der CLI, der PIN und/oder der Rufnummer der kommend belegten Leitung.

Das oben aufgeführte Leistungsmerkmal der PABX und die PIN und/ oder Zielrufnummer wird mittels eines D-Kanal-Protokolls übertragen. Wenn die Zielrufnummer erfolgreich angewählt wurde, so hat eine Auswahl der gehenden Leitung von der PABX stattgefunden, und eine mögliche Übertragung im D-Kanal-Protokoll wird daraufhin beendet. Damit wird festgelegt, daß keine weiteren Zeichen mehr folgen dürfen und in einem D-Kanal-Protokoll auch nicht akzeptiert werden. Somit ist keine Blockwahl seitens des Anrufers möglich, die mehr als die zur Authentisierung des Anrufers notwendig einzugebenden Zeichen und die Zielrufnummer beinhaltet. Dadurch kann einem langwierigen Zugriff durch eine unberechtigte Person vorgegriffen werden.

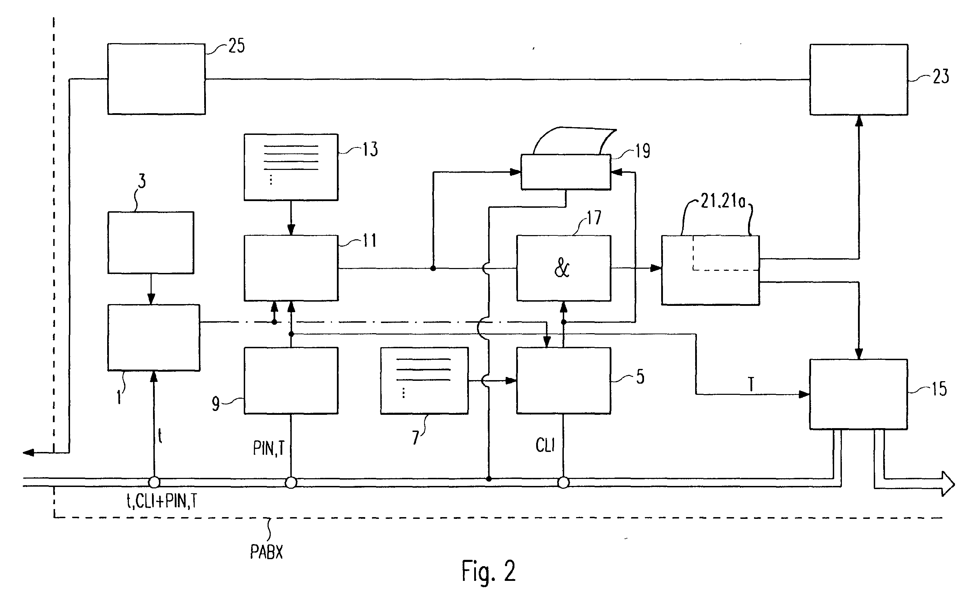

In Fig. 2 sind skizzenartig die für die Ausführung der Erfindung wesentlichen Funktionskomponenten einer Nebenstellenanlage PABX unter Vorrichtungsaspekten dargestellt. Es versteht sich, daß die vorgeschlagene Lösung in einer Kombination aus Hard- und Softwaremerkmalen realisiert wird, so daß die Funktionsblöcke in Fig. 2 nicht als Schaltungsbausteine zu verstehen sind. Im übrigen ist in der Figur auch eine von der üblichen Darstellung von Merkmalen und Protokollabläufen in Telekommunikationsanlagen unabhängige Darstellung gewählt.

Ein von extern kommender Anruf, der in der Figur mit einer Doppellinie dargestellt ist, trägt eine Zeitinformation t (Anrufzeitpunkt) und eine Rufnummernkennung CLI des Endgerätes, von dem er ausgeht. Später wird im Rahmen der bestehenden Verbindung noch eine persönliche Geheimzahl PIN des Anrufers und eine Zielrufnummer T (Target) übertragen. Es wird angenommen, daß der Anrufer per Zugriff über die Nebenstellenanlage PABX zum einen an einen anderen Teilnehmer vermittelt werden und zum anderen aus einem internen Speicher eine Information abrufen und an seinem Endgerät angezeigt haben möchte. Um welche Art Information und Speicher es sich dabei handelt, wird für die nachfolgende Beschreibung außer Betracht gelassen. Weiterhin sind in dieser Darstellung die Schritte S1 und S2 nach Fig. 1 außer Betracht gelassen.

Zunächst wird in einer Zeit-Vergleichereinheit 1 die Information bezüglich des Anrufzeitpunktes mit in einem Berechtigungszeitspeicher 3 gespeicherten Zeitpunkten bzw. -spannen (im Sinne des Schrittes S3 in Fig. 1) verglichen und ein entsprechendes Steuersignal an nachgeschaltete Komponenten ausgegeben, das diese zu einer weiteren Prüfung aktiviert oder - falls der Anruf außerhalb von Berechtigungszeiten erfolgt - inaktiv hält. Desweiteren wird in einer Rufnummern-Vergleichereinheit 5 die Rufnummernkennung CLI einem Vergleich mit einer in einem Referenznummernspeicher 7 gespeicherten Liste berechtigter Rufnummern unterzogen, von denen ein grundsätzlich zum Zugriff auf die PABX berechtigender Anruf ausgehen kann. Die Rufnummern-Vergleichereinheit 5 ist eine der Komponenten, die durch das Ausgangssignal der Zeit-Vergleichereinheit angesteuert werden.

Desweiteren - im Normalfall zeitlich nach der Auswertung des Anrufzeitpunktes und der Rufnummernkennung und nach Ausgabe einer entsprechenden Eingabeaufforderung (siehe dazu oben) - werden die vom Anrufer eingegebene Geheimzahl PIN und Zielrufnummer T als zusammenhängende Datenbitfolge einer Eingaben-Auswertungsstufe 9 zugeführt, die hieraus einerseits die Geheimzahl und andererseits die Zielrufnummer extrahiert und diese unterschiedlichen Verarbeitungskomponenten zuführt. Hierbei handelt es sich (für die PIN) um eine PIN-Vergleichereinheit 11, die mit einem PIN-Referenzspeicher 13 in Verbindung steht, und andererseits um eine Wahleinrichtung 15. Auch die PIN-Vergleichereinheit 11 wird seitens der Zeit-Vergleichereinheit 5 aktiviert.

Die PIN-Vergleichereinheit 11 und die Rufnummern-Vergleichereinheit 5 sind ausgangsseitig mit einem UND-Glied 17 und außerdem mit Steuereingängen einer Ausgabeeinrichtung (Protokolldrucker) 19 verbunden. An dessen Dateneingang liegen die mit dem Anruf übertragenen Informationen CLI, PIN und T an, und dieser druckt die entsprechenden Daten im Ansprechen auf ein negatives Vergleichsergebnis bei der Rufnummernauswertung oder PIN-Auswertung aus, wie oben bereits erwähnt.

Das UND-Glied 17 ist ausgangsseitig mit einer Steuereinrichtung 21 verbunden, welche eine Speicherzugriffssteuerung 21a umfaßt und ihrerseits ausgangsseitig mit einem Steuereingang der Wahleinrichtung 15 sowie einem Datenspeicher 23 der Nebenstellenanlage verbunden ist. Falls beide Vergleichereinheiten 5 und 11 ein positives Vergleichsergebnis signalisieren, wird über das UND-Glied 17 die Steuereinheit 21 mit einer Speicherzugriffssteuerung 21a zu einer Freigabe des Zugriffs auf den Datenspeicher 23 sowie zur Ausgabe eines Aktivierungssignals an die Wahleinrichtung 15 angesteuert und somit für den Anrufer sowohl der Speicherzugriff freigegeben als auch die gewünschte Verbindung zur Zielrufnummer T hergestellt. Über eine mit dem Datenspeicher 23 verbundene Datenübertragungseinheit 25 werden ihm die gewünschten Daten an das Endgerät geliefert, von dem aus er angerufen hat.

Es wird darauf hingewiesen, daß im Rahmen der Ansprüche alle oben beschriebenen Schritte und Vorrichtungsmerkmale für sich alleine gesehen und in jeder Kombination als erfindungswesentlich beansprucht werden. Abänderungen hiervon sind dem Fachmann geläufig.

### Bezugszeichenliste

- 1: Zeit-Vergleichereinheit
- 3: Berechnungszeitspeicher
- 5: Rufnummern-Vergleichereinheit
- 7: Referenznummernspeicher
- 9: Eingaben-Auswertungsstufe
- 11: PIN-Vergleichereinheit
- 13: PIN-Referenzspeicher
- 15: Wahleinrichtung
- 17: UND-Glied
- 19: Ausgabeeinheit (Protokolldrucker)
- 21: Steuereinheit
- 21a: Speicherzugriffssteuerung
- 23: Datenspeicher
- 25: Datenübertragungseinheit
- CLI: Calling Line Identification
- PABX: Nebenstellenanlage
- t: Zeit
- T: Zielrufnummer

## Patentansprüche

1. Verfahren zur Authentisierung beim Zugriff auf eine Telekommunikationsanlage zur Nutzung von mindestens einer Funktion derselben über eine Amtsleitung durch einen Telekommunikationsteilnehmer von einem fernen Endgerät, dessen Rufnummer (CLI) mit übertragen wird,
**dadurch gekennzeichnet, daß**
bei dem Anruf ein durch den Telekommunikationsteilnehmer eingegebener Authentisierungscode oder biometrischer Merkmalssatz übertragen und
in der Telekommunikationsanlage aufgrund der übertragenen Rufnummer sowie des Authentisierungscodes bzw. biometrischen Merkmalssatzes eine Prüfung der Zugriffsberechtigung durchgeführt und in Abhängigkeit vom Prüfungsergebnis eine Freigabe oder Sperrung der Funktion vorgenommen wird.

2. Verfahren nach Anspruch 1,
**dadurch gekennzeichnet, daß**
die übertragene Rufnummer mit einer in einem ersten Speicher der Telekommunikationsanlage gespeicherten Referenz-Ziffernfolge verglichen und ein erstes Steuersignal zur bedingten Freigabe oder Sperrung der Funktion generiert wird.

3. Verfahren nach Anspruch 1 oder 2, insbesondere nach Anspruch 2,
**dadurch gekennzeichnet, daß**
der übertragene Authentisierungscode bzw. biometrische Merkmalssatz mit einem in einem zweiten Speicher der Telekommunikationsanlage gespeicherten Referenz-Authentisierungscode bzw. Referenz-Merkmalssatz verglichen und im Ergebnis des Vergleiches ein zweites Steuersignal zur bedingten Freigabe oder Sperrung der Funktion ausgegeben wird.

4. Verfahren nach einem der vorangegangenen Ansprüche, insbesondere nach Anspruch 1,
**dadurch gekennzeichnet, daß**
die übertragene Rufnummer und der Authentisierungscode bzw. biometrische Merkmalssatz mit einem in einem Speicher der Telekommunikationsanlage gespeicherten Referenzmerkmalspaar aus einer Referenz-Ziffernfolge und einem Referenz-Authentisierungscode bzw. Referenz-Merkmalssatz in einem einzigen Vergleichsvorgang verglichen und im Ergebnis des Vergleiches ein einziges Steuersignal zur Freigabe oder Sperrung der Funktion generiert wird.

5. Verfahren nach einem der vorangegangenen Ansprüche,
**dadurch gekennzeichnet, daß**
die Funktion der Telekommunikationsanlage den Aufbau einer Telekommunikationsverbindung zwischen dem anrufenden Telekommunikationsteilnehmer und einem anzurufenden Telekommunikationsteilnehmer umfaßt.

6. Verfahren nach einem der vorangegangenen Ansprüche,
**dadurch gekennzeichnet, daß**
die Funktion der Telekommunikationsanlage ein aktivierbares Leistungsmerkmal der Telekommunikationsanlage, insbesondere eine Rufweiterleitungs- oder Rufbeantwortungsfunktion, oder die Anzeige eines Speicherinhaltes, insbesondere einer Rufnummernliste, einer Anruferliste oder von Notizbucheinträgen, umfaßt.

7. Verfahren nach einem der vorangegangenen Ansprüche,
**dadurch gekennzeichnet, daß**
der zu sendende Authentisierungscode und/oder eine Zielrufnummer mittels Mehrfrequenz-Wahlverfahren eingegeben wird.

8. Verfahren nach einem der vorangegangenen Ansprüche,
**dadurch gekennzeichnet, daß**
durch ein Leistungsmerkmal der Telekommunikationsanlage eine Aufforderung zur Eingabe des Authentisierungscodes bzw. biometrischen Merkmalssatzes generiert und an das Endgerät des anrufenden Telekommunikationsteilnehmers übermittelt wird.

9. Verfahren nach einem der vorangegangenen Ansprüche, insbesondere nach Anspruch 8,
**dadurch gekennzeichnet, daß**
das Leistungsmerkmal der Telekommunikationsanlage und der eingegebene Authentisierungscode bzw. biometrische Merkmalssatz und/oder die Zielrufnummer mittels eines Datenkanal-Protokolls übertragen werden.

10. Verfahren nach einem der vorangegangenen Ansprüche,
**dadurch gekennzeichnet, daß**
nach erfolgreicher Authentisierung des anrufenden Telekommunikationsteilnehmers die Aufbauphase der Telekommunikationsverbindung zwischen dem anrufenden Telekommunikationsteilnehmer und dem anzurufenden Telekommunikationsteilnehmer über eine Amtsleitung durch die Telefonanlage überwacht wird.

11. Verfahren nach einem der vorangegangenen Ansprüche,
**dadurch gekennzeichnet, daß**
bei einer nicht erfolgreichen Authentisierung des anrufenden Telekommunikationsteilnehmers in der Telekommunikationsanlage die Rufnummer des vom Anrufer benutzten Endgerätes und wahlweise der Authentisierungscode bzw. biometrische Merkmalssatz protokolliert wird.

12. Verfahren nach einem der vorangegangenen Ansprüche,
**dadurch gekennzeichnet, daß**
zur Authentisierung eine Zeitspanne (4) nach dem Verbindungsaufbau definiert ist.

13. Telekommunikationsanlage (PABX), die eine Authentisierung beim Zugriff zur Nutzung von mindestens einer Funktion über eine Amtsleitung durch einen Telekommunikationsteilnehmer von einem fernen Endgerät, dessen Rufnummer (CLI) mit übertragen wird, erlaubt, insbesondere zur Durchführung des Verfahrens nach einem der vorangegangenen Ansprüche,
**gekennzeichnet durch**
mindestens eine Speichereinrichtung (7, 13) zur Speicherung von Referenz-Ziffernfolgen zum Vergleich mit der übertragenen Rufnummer sowie von Referenz-Authentisierungscodes bzw. Referenz-Merkmalssätzen zum Vergleich mit einem übertragenen Authentisierungscode (PIN) bzw. Merkmalssatz,
eine mit der Speichereinrichtung verbundene Vergleichereinheit (5, 11) zum Vergleich der übertragenen Daten mit den Referenzdaten und
eine mit dem Ausgang der Vergleichereinheit verbundene Steuereinheit (21) zur Freigabe oder Sperrung der Funktion in Abhängigkeit vom Vergleichsergebnis.

14. Telekommunikationsanlage nach Anspruch 13,
**dadurch gekennzeichnet, daß**
ein Leistungsmerkmal zur Generierung und Übermittlung einer Eingabeaufforderung an das Endgerät des Anrufers zur Eingabe des Authentisierungscodes oder biometrischen Merkmalssatzes nach Zustandekommen der Verbindung vorgesehen ist.

15. Telekommunikationsanlage nach einem der Ansprüche 13 bis 14,
**gekennzeichnet durch**
eine Auswertungseinrichtung (9) zur Extraktion eines Authentisierungscodes (PIN) bzw. einer den biometrischen Merkmalssatz repräsentierenden Datenbitfolge und einer Funktions-Kennzeichnung bzw. Zielrufnummer (T) aus einer am Endgerät des Anrufers eingegebenen Gesamt-Datenbitfolge.

16. Telekommunikationsanlage nach einem der Ansprüche 13 bis 15,
**gekennzeichnet durch**
eine über einen Steuereingang mit der Steuereinheit (21) verbundene Wahleinrichtung (15) zur Herstellung einer Telekommunikationsverbindung zwischen dem Anrufer und einem anzurufenden Telekommunikationsteilnehmer als Funktion der Telekommunikationsanlage in Abhängigkeit vom Vergleichsergebnis.

17. Telekommunikationsanlage nach einem der Ansprüche 13 bis 16,
**dadurch gekennzeichnet,daß**
die Steuereinheit (21) eine Speicherzugriffssteuerung (21a) zum Auslesen des Speicherinhaltes eines Datenspeichers (23) der Telekommunikationsanlage, insbesondere eines Rufnummern-, Anruflisten- oder Notizbuchspeichers in Abhängigkeit vom Vergleichsergebnis umfaßt und eine mit dem auszulesenden Speicher verbindbare Übertragungseinrichtung (25) zur Übertragung des Speicherinhaltes an das ferne Endgerät vorgesehen ist.
